# EUROPÄISCHE PATENTSCHRIFT

(11) **EP 3 800 049 B1**
(45) Veröffentlichungstag und Bekanntmachung des Hinweises auf die Patenterteilung: **29.11.2023**
(21) Anmeldenummer: 20199532.1
(22) Anmeldetag: 01.10.2020
(51) Int. Cl.: B32B 29/00, B32B 1/08, B32B 7/12, B32B 9/02, B32B 27/10, B32B 27/36, B32B 37/12, B65D 65/40

(54) **VERFAHREN ZUR HERSTELLUNG EINES FOLIENVERBUNDS, FOLIENVERBUND ZUR VERPACKUNG VON PRODUKTEN SOWIE VERPACKUNG**
METHOD FOR PRODUCING A FILM COMPOSITE, FILM COMPOSITE FOR PACKAGING PRODUCTS AND PACKAGING
PROCÉDÉ DE FABRICATION D'UN FEUILLE COMPOSITE, FEUILLE COMPOSITE DESTINÉE À L'EMBALLAGE DES PRODUITS AINSI QU'EMBALLAGE

(30) Priorität: 02.10.2019 DE 102019126655
(43) Veröffentlichungstag der Anmeldung: 07.04.2021
(73) Patentinhaber: Superseven GmbH, 21039 Börnsen (DE)
(72) Erfinder: Seevers, Sven, 21465 Wentorf (DE); Seevers, Katja, 21465 Wentorf (DE); Füting, Hannes, 10997 Berlin (DE)
(74) Vertreter: Klickow & Wetzel PartGmbB

(56) Entgegenhaltungen:
- EP-A1- 2 589 366
- US-A1- 2008 160 327
- US-A1- 2014 147 604

## Beschreibung

Die vorliegende Erfindung betrifft einen kompostierbaren Folienverbund mit wenigstens zwei Materialschichten zur Primärverpackung von Produkten, insbesondere von Lebensmitteln.

Weiterhin betrifft die Erfindung ein Verfahren zur Herstellung eines solchen Folienverbunds.

Darüber hinaus betrifft die Erfindung eine zumindest teilweise aus einem solchen Folienverbund hergestellte Verpackung.

Viele Produkte, insbesondere Lebensmittel, werden aktuell in flexiblen Folien oder Folienverbunden, die auf Basis von Polyolefinen hergestellt sind, verpackt. Die Verpackung dient zum Schutz der Produkte vor mechanischen Einflüssen, der Migration von flüchtigen Stoffen aus der Umgebung in das Produkt und der Vermeidung des Austauschs von Wasserdampf und Sauerstoff.

Diese Verpackungen haben jedoch den Nachteil, dass Ihre Inhaltsstoffe selbst, insbesondere flüchtige synthetische Weichmacher (z.B. Phthalate) und Stoffe aus der Umgebung (z.B. flüchtige Kohlenwasserstoffe) in das verpackte Produkt migrieren und damit die Qualität des Produkts, insbesondere des Lebensmittels, nachhaltig negativ beeinflussen.

Selbst wenn Polyolefine durch Materialien aus natürlichen und nachwachsenden Rohstoffen, z.B. Cellulose, ersetzt werden, ist die Anwendbarkeit und die Funktionalität der einzelnen Komponenten in Bezug auf die Maschinengängigkeit, die Haltbarkeit der Siegelnähte und die aktuellen Anforderungen, insbesondere an die Mindesthaltbarkeit von Lebensmitteln, nicht gegeben.

Beispielsweise hat Cellulose exzellente Schutzeigenschaften bezüglich der Migration von flüchtigen Kohlenwasserstoffen (MOSH / MOAH) und des Einflusses schädlicher UV-Strahlung, besitzt aber nur eingeschränkte Eigenschaften in Bezug auf die mechanische Belastbarkeit in industriellen Abpackprozessen und bei der Verwendung der aus Cellulose hergestellten Verpackungen.

Die Ursache für diese Qualitäts- und Funktionseinbußen liegt in der Anordnung, der Auswahl und der Zusammensetzung der dabei eingesetzten Materialien zur Herstellung einer Verpackung.

Aus der EP2589366 A1 ist bereits ein Folienverbund zur Verpackung von Produkten bekannt. Der Folienverbund besitzt einen Aufbau aus Schichten und eine Verbindung der Schichten erfolgt durch eine Verklebung. Ähnliche Folienverbünde werden auch in der US 2014/147604 A1 sowie der US 2008/160327 A1 beschrieben.

Eine Aufgabe der vorliegenden Erfindung ist es daher, einen Folienverbund bzw. eine aus einem solchen Folienverbund hergestellte Verpackung zu schaffen, der bzw. die die Qualität der darin verpackten Produkte, insbesondere Lebensmittel, über die gesamte Haltbarkeitsdauer zu erhalten.

Diese Aufgabe wird erfindungsgemäß durch einen Folienverbund aufweisend die Merkmale des Patentanspruchs 1 und eine Verpackung gemäß Patentanspruch 6 gelöst.

Eine weitere Aufgabe der vorliegenden Erfindung ist es, einen Folienverbund bzw. eine aus einem solchen Folienverbund hergestellte Verpackung zu schaffen, der bzw. die aus kompostierbaren Materialien hergestellt ist und gleichzeitig eine verbesserte mechanische Belastbarkeit aufweist.

Diese Aufgabe wird erfindungsgemäß durch einen Folienverbund aufweisend die Merkmale des Patentanspruchs 1 und eine Verpackung gemäß Patentanspruch 6 gelöst.

Eine weitere Aufgabe der Erfindung ist es, ein Verfahren zur Herstellung eines erfindungsgemäßen Folienverbunds anzugeben.

Diese Aufgabe wird erfindungsgemäße durch ein Verfahren aufweisend die Merkmale des Patentanspruchs 9 gelöst.

Die Herausforderung und das Ziel der Erfindung besteht darin, eine Materialkombination zu wählen und in einem technischen Verfahren so herzustellen, dass sich Produkte, insbesondere Lebensmittel, wie gewohnt maschinell verpacken lassen und nach dem Verpacken bis zur Nutzung des Produkts, insbesondere des Verzehrs eines Lebensmittels, möglichst nicht negativ verändert werden.

Die erfindungsgemäße Lösung verhindert im Gegensatz zum Stand der Technik die Migration von materialeigenen Substanzen, wie z.B. Weichmachern, in das Lebensmittel. Außerdem schützt sie vielfach besser vor der Migration von Schadstoffen aus der Umwelt in das Produkt, insbesondere in das Lebensmittel, und vor der produktschädigenden Wirkung von UV-Strahlen. Die Erfindung verbessert somit die Qualität des Produkts, insbesondere des Lebensmittels, in dem Zeitraum nach dem Verpacken bis zur Nutzung des verpackten Produkts, insbesondere des Verzehrs des Lebensmittels.

Außerdem gewährleistet die erfindungsgemäße Lösung die Anwendbarkeit von Verpackungsmaterialien aus natürlichen und nachwachsenden Rohstoffen in industriellen Abpackprozessen und sorgt damit für die Wirtschaftlichkeit des Einsatzes dieser Materialien in industriellem Maßstab.

Erfindungsgemäß sind alle für den Folienverbund verwendeten Materialien zertifiziert kompostierbar nach EN 13432 und/oder AS 5810 und/oder NF T51-800:2015.

Im Hinblick auf die kompostierbaren Eigenschaften des Folienverbunds ist insbesondere an eine Kompostierung in natürlicher Umgebung (Heim- und Gartenkompostierung) gedacht.

Ein erfindungsgemäßer Folienverbund ist aus mindestens zwei Folienschichten aufgebaut, wobei die nebeneinanderliegenden Schichten jeweils miteinander verklebt sind. Dabei weist der Folienverbund eine innere Schicht auf, die zum Kontakt mit einem zu verpackenden Produkt ausgebildet ist, und eine äußere Schicht auf.

Erfindungsgemäß ist die innere Schicht des Folienverbunds als eine thermoplastische Polyesterfolie ausgebildet.

Die thermoplastische Polyesterfolie ist dabei als eine Stärkeblend-Folie oder als eine PLA-Blend-Folie ausgebildet.

Eine Stärkeblendfolie weist in erfindungsgemäßen Ausführungsformen des Folienverbunds eine Mischung aus aliphatischen und aromatischen Polyestern auf (Copolyester). Diese copolymerisierte Mischung verbindet eine biologische Abbaubarkeit mit guten Materialeigenschaften.

Eine PLA-Blend-Folie ist in erfindungsgemäßen Ausführungsformen des Folienverbunds eine Mischung aus reinem PLA und stärkebasierender Polyesterfolie (Stärkeblend-Folie). Das PLA (Polylactid) weist D- oder L-Lactide auf. Weitere Zusätze sind in erfindungsgemäßen Ausführungsformen möglich, sofern diese die Kompostierbarkeit der PLA-Blend-Folie nicht wesentlich beeinträchtigen.

Dabei sind in erfindungsgemäßen Ausführungsformen insbesondere Polylactide aus Milchsäuren und Lactiden, die durch die Fermentation von Zucker und deren Polymerisation entstehen, und aliphatische und/oder aromatische Copolyester aus Komponenten, wie 1,2-Ethandiol, 1,3-Propandiol, 1,4-Butandiol, Adipinsäure, Sebacinsäure, Butadinsäure verwendet.

Die thermoplastische Polyesterfolie weist darüber hinaus einen Anteil von 35-55 Mol-% (bezogen auf den Säureanteil) Terephthalsäure auf. Dadurch sind die für die Verwendung in einem erfindungsgemäßen Folienverbund bzw. in einer erfindungsgemäßen Verpackung erforderlichen Materialeigenschaften realisierbar.

Diese Zusammensetzung der inneren Schicht des erfindungsgemäßen Folienverbunds ermöglicht somit in Verbindung mit der mindestens einen übrigen Schicht die zur industriellen Verwendung eines erfindungsgemäßen Folienverbunds erforderliche mechanische Stabilität des Folienverbunds bei gleichzeitiger Bereitstellung der für den unmittelbaren Kontakt mit Lebensmitteln, insbesondere auch mit feuchten Lebensmitteln, wie beispielsweise Fleisch oder Fisch, erforderlichen Wasserfestigkeit.

Die innere Schicht des Folienverbunds weist eine Stärke von 10µm bis 70µm auf.

Die innere Schicht des Folienverbunds schafft, wenn mit dem Folienverbund ein Lebensmittel verpackt ist, ein Mikroklima, das das Lebensmittel haltbarer macht, sodass beispielsweise die auch mit herkömmlichen Verpackungen erreichbare Mindesthaltbarkeit des jeweiligen Lebensmittels erreicht wird.

Die thermoplastische Stärkeblend- und/oder PLA-Blend Folie ist in einer Ausführungsform der Erfindung als eine coextrudierte Polyesterfolie ausgebildet.

Die thermoplastische Stärkeblend- und/oder PLA-Blend Folie ist in bevorzugten Ausführungsformen der Erfindung transparent oder eingefärbt ausgeführt.

In vorteilhaften Ausführungsformen der Erfindung ist die thermoplastische Polyesterfolie heißsiegelfähig und/oder ultraschallsiegelfähig.

Die äußere Schicht ist erfindungsgemäß als eine cellulosebasierende Folie aus natürlichen und nachwachsenden Rohstoffen ausgebildet.

Die äußere Schicht weist eine Stärke von 19µm bis 45µm auf.

In Ausführungsformen der Erfindung weist der Folienverbund mindestens eine zwischen der inneren und der äußeren Schicht angeordnete mittlere Schicht auf.

Die mindestens eine mittlere Schicht ist in Ausführungsformen der Erfindung als eine cellulosebasierende Folie aus natürlichen und nachwachsenden Rohstoffen ausgebildet.

Die äußere Schicht aus Cellulosefolie und in Ausführungsformen der Erfindung eine ggf. vorhandene mindestens eine mittlere Schicht erhöhen die Schutzfunktion des Folienverbunds in Bezug auf die Migration von Stoffen durch den Folienverbund hindurch und/oder die Steifigkeit des erfindungsgemäßen Folienverbunds.

Dazu sind in vorteilhaften Ausführungsformen der Erfindung insbesondere Cellulosefolien, die durch ein Viskoseverfahren oder durch Blasextrusion hergestellt sind und im Wesentlichen Cellulose, Wasser und Glycerin enthalten, verwendet.

Die Cellulosefolie ist in bevorzugten Ausführungsformen der Erfindung transparent oder eingefärbt oder metallisiert ausgeführt.

Eine Metallisierung der Cellulosefolie erhöht dabei signifikant die Barrierefunktion des Folienverbunds.

Eine Transparenz oder eine Einfärbung der Cellulosefolie dient der Erzeugung der gewünschten Optik des Folienverbunds.

In vorteilhaften Ausführungsformen der Erfindung ist die Cellulosefolie heißsiegelfähig und/oder ultraschallsiegelfähig.

In weiteren vorteilhaften Ausführungsformen der Erfindung ist die Cellulosefolie in verschiedenen gängigen Verfahren bedruckbar.

Der erfindungsgemäße Folienverbund ist in bevorzugten Ausführungsformen weiterhin dadurch gekennzeichnet, dass dieser mindestens eine zusätzliche Barriereschicht aufweist, die eine Barrierefunktion erfüllt.

In einer besonders bevorzugten Ausführungsform der Erfindung weist die Cellulosefolie mindestens einer Schicht des Folienverbunds eine einseitige oder eine beidseitige Barrierebeschichtung auf, die eine Migration von Sauerstoff und Wasserdampf hemmt.

In bevorzugten Ausführungsformen der Erfindung hemmt die Barriereschicht darüber hinaus auch die Migration von Aromen und Weichmachern.

Die Barriereschicht ist in Ausführungsformen der Erfindung als eine wachsartige Schicht ausgebildet.

In weiteren Ausführungsformen der Erfindung ist die Barriereschicht unter Verwendung von Polyvinylidenchlorid (PVDC), Vinylalkohol (EVOH) oder Siliciumoxid (SIOX) ausgeführt.

Es sind jedoch auch auf anderen Stoffen basierende Barriereschichten möglich, die eine entsprechende Barrierefunktion und Kompostierbarkeit aufweisen.

Die Barriereschicht(en) ist bzw. sind in Ausführungsformen der Erfindung lackartig und flächig auf die entsprechende Trägerschicht des Folienverbunds aufgetragen.

Die Verbindung der Folienschichten zu einem erfindungsgemäßen Folienverbund erfolgt erfindungsgemäß durch die Verwendung eines kompostierbaren Klebstoffs.

Der Klebstoff besteht in Ausführungsformen der Erfindung aus einer wasserbasierenden Dispersion, einer lösemittelhaltigen Mischung oder einer lösemittelfreien 2-Komponenten Variante aus Grundstoff und Härter.

Die mit dem Klebstoff zur Verbindung zweier Schichten gebildete Klebstoffschicht weist eine Stärke von 1 µm bis 4µm auf.

Weiterhin ermöglicht die vorliegende Erfindung die Anwendung von cellulosebasierenden Folien als schutzgebende Schicht(en), die für maschinelle Abpackprozesse in industriellem Maßstab zur Herstellung von Schutzverpackungen, insbesondere für Lebensmittel, geeignet ist.

Darüber hinaus ermöglicht die vorliegende Erfindung die Verwendung des Folienverbundes zur Herstellung von Primärverpackungen als Schutz für verderbliche und Mikrobakterien enthaltende Lebensmittel, wie z.B. Nüsse, Müsli, Käse oder Fleisch.

Ein erfindungsgemäßer Folienverbund zeichnet sich somit dadurch aus, dass dieser
- in industriellen Prozessen zu Beutelverpackungen verarbeitbar ist und / oder
- in HFFS und VFFS Abfüllprozessen verwendbar ist und/ oder
- für den direkten Kontakt mit Lebensmitteln geeignet ist und / oder
- als Primärverpackung für trockene und feuchte Produkte, insbesondere Lebensmittel, verwendbar ist.

Eine erfindungsgemäße Verpackung ist zumindest teilweise aus einem erfindungsgemäßen Folienverbund hergestellt.

In einer bevorzugten Ausführungsform der Erfindung ist die Verpackung vollständig aus einem erfindungsgemäßen Folienverbund hergestellt.

Eine erfindungsgemäße Verpackung weist in vorteilhaften Ausführungsformen zumindest eine Siegelnaht auf, an der zwei Lagen eines erfindungsgemäßen Folienverbunds durch Heißsiegeln oder Ultraschallsiegeln miteinander verbunden sind.

In einer Ausführungsform der Erfindung ist die Verpackung als ein Verpackungsbeutel ausgebildet.

Dazu ist in Ausführungsformen ein erfindungsgemäßer Folienverbund gefaltet, sodass zwei Lagen des Folienverbunds mit der jeweils inneren Schicht aneinander liegen und wobei die aufeinanderliegenden Lagen des Folienverbunds an zumindest zwei Seiten durch Siegelnähte miteinander verbunden sind. Alternativ können auch einzelne Folienabschnitte aufeinander gelegt und an mindestens drei Seiten versiegelt werden. Die zumindest eine offene Seite der Verpackung kann nach dem Einfüllen eines Produkts ebenfalls mithilfe einer Siegelnaht versiegelt sein.

Durch die Verwendung einer inneren Schicht gemäß der vorstehenden Beschreibung für einen erfindungsgemäßen Folienverbund ist eine wesentlich höhere Festigkeit einer Siegelnaht im Vergleich zur alleinigen Verwendung von heißsiegel- und/oder ultraschallsiegelfähiger Cellulosefolie realisierbar. In Ausführungsformen der Erfindung ist die Festigkeit einer Siegelnaht eines erfindungsgemäßen Folienverbunds bis zu zehnmal höher als bei der alleinigen Verwendung einer Cellulosefolie. Dadurch ist eine wesentlich stabilere Verpackung realisierbar, die höheren mechanischen Belastungen bei der Verpackung von Produkten und bei dem Gebrauch der Verpackung standhält.

Darüber hinaus ermöglicht der erfindungsgemäße Folienverbund die Herstellung von Siegelnähten bei wesentlich geringeren Siegeltemperaturen, in Ausführungsformen der Erfindung bei einer Siegeltemperatur ab etwa 90°C. Dies ermöglicht gleichzeitig eine höhere Maschinengeschwindigkeit bei der Versiegelung des erfindungsgemäßen Folienverbunds aufgrund der geringeren Aufheiz- und Kühlzeiten.

Ein erfindungsgemäßes Verfahren zur Herstellung eines erfindungsgemäßen Folienverbunds umfasst zumindest die folgenden Verfahrensschritte:
- Mischen von Klebstoffkomponenten in einer Mischanlage zu einem Klebstoff
- Auftragen des Klebstoffs auf die Innenseite einer ersten Folie
- Zusammenfügen der ersten Folie und einer zweiten Folie zu einem Folienverbund, wobei die mit Klebstoff bedeckte Innenseite der ersten Folie mithilfe eines Kaschierwerks an der zweiten Folie angedrückt wird
- Aufwickeln des Folienverbunds auf einer Rolle

In einer weiteren Ausführungsform des Verfahrens ist dieses zur Herstellung eines Folienverbunds aus drei Folienschichten ausgebildet. Dabei besteht der so hergestellte Folienverbund aus einer inneren Schicht, einer mittleren Schicht und einer äußeren Schicht, wobei auf die Innenseite der die äußere Schicht bildenden Folie und auf die zur Verbindung mit der inneren Schicht vorgesehene Seite der die mittlere Schicht bildenden Folie Klebstoff aufgetragen wird.

Das Auftragen des Klebstoffs erfolgt in vorteilhaften Ausführungsformen des erfindungsgemäßen Verfahrens mithilfe von Übertragungswalzen.

Die Erfindung wird nachfolgend und mit Bezug auf die beigefügten Zeichnungen anhand beispielhafter Ausführungsformen näher erläutert. Die Zeichnungen zeigen in
- Figur 1:: einen zweilagigen Folienverbund mit Verwendung einer Barriereschicht und einer Klebeschicht,
- Figur 2:: einen dreilagigen Folienverbund mit Verwendung zweier Barriereschichten und zweier Klebeschichten,
- Figur 3:: eine Vorrichtung zur Herstellung eines zweilagigen lösemittelfreien Folienverbunds,
- Figur 4:: eine Vorrichtung zur Herstellung eines zweilagigen, lösemittelhaltigen Folienverbunds und
- Figur 5:: eine Vorrichtung zur Herstellung eines dreilagigen, lösemittelfreien Folienverbunds.

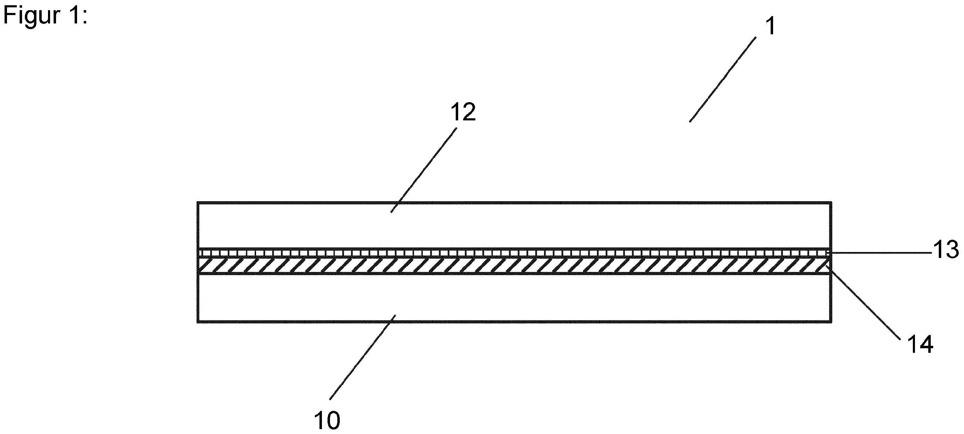

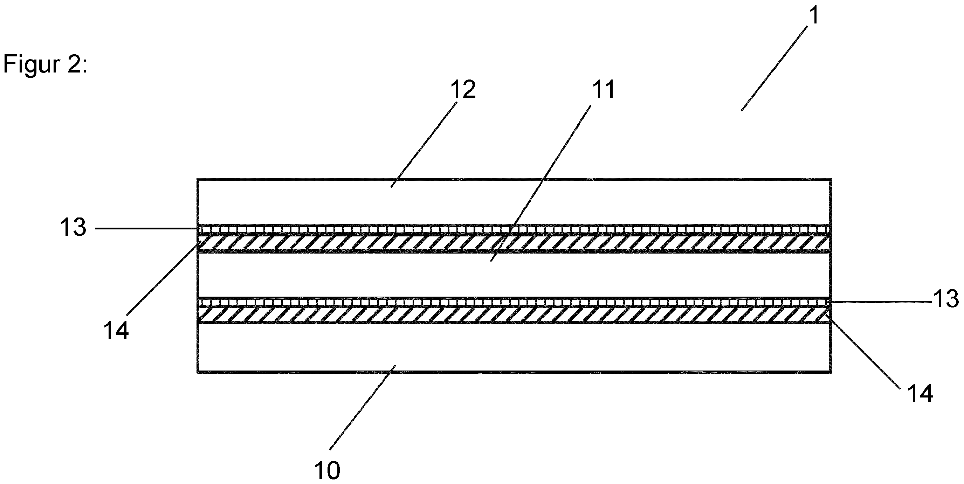

Gemäß den Ausführungsbeispielen in Figur 1 und Figur 2 ist eine innere Schicht (10) der dargestellten erfindungsgemäßen Folienverbunde (1) als eine thermoplastische Polyesterfolie (Stärkeblendfolie oder PLA Blendfolie) gebildet.

Eine mittlere Schicht (11) und/oder eine äußere Schicht (12) des Folienverbunds (1) sind als eine cellulosebasierte Folie aus natürlichen und/oder nachwachsenden Rohstoffen ausgebildet.

Die mittlere Schicht (11) und/oder die äußere Schicht (12) können mindestens eine zusätzliche Barriereschicht (13) aufweisen.

Gemäß jedem der gezeigten Ausführungsbeispiele ist eine kompostierbare Klebeschicht (14) verwendet. Diese wird bevorzugt zwischen den Lagen des Folienverbundes (1) angeordnet und ermöglicht, mehrere übereinander angeordnete Schichten zu verbinden und hierdurch mehrschichtige Folienverbunde (1) bereit zu stellen.

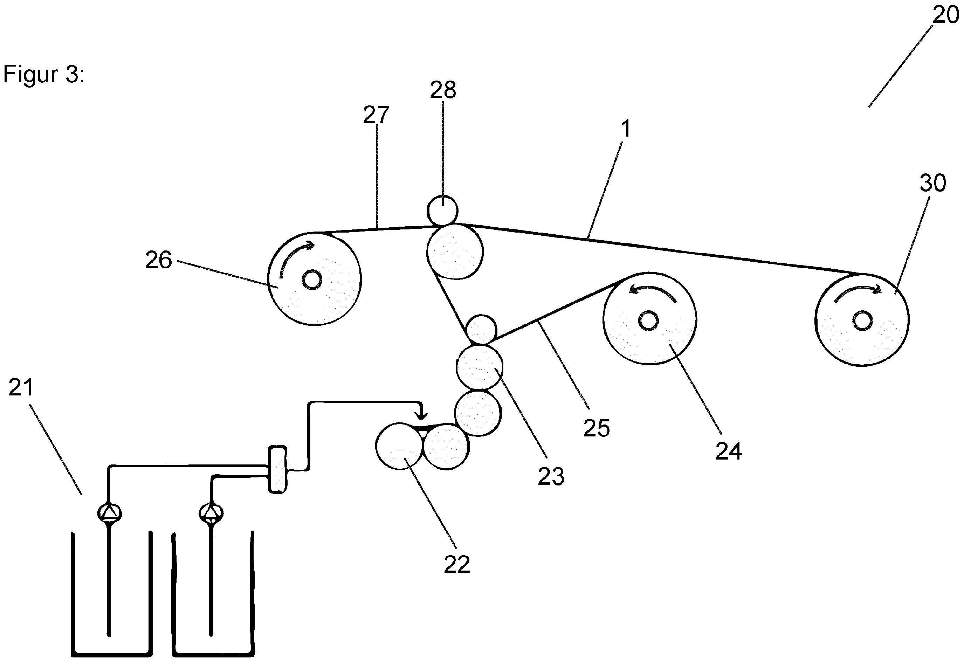

In Figur 3 ist eine Vorrichtung zur Herstellung (20) eines zweilagigen lösemittelfreien erfindungsgemäßen Folienverbunds (1) schematisch dargestellt, anhand derer folgend das Verfahren zur Herstellung eines solchen Folienverbunds (1) erläutert wird.

In einer Mischanlage (21) werden die Komponenten Klebstoff und Härter miteinander vermengt und einem Auftragswerk (22) zugeführt. Das Auftragswerk (22) trägt den Klebstoff in Form einer Klebeschicht mithilfe von Übertragungswalzen (23) auf eine von einer ersten Rolle (24) abgerollten ersten Folie (25) auf. Mithilfe eines Kaschierwerks (28) wird die von einer zweiten Rolle (26) abgerollte zweite Folie (27) so mit der ersten Folie (25) verbunden, dass die Klebeschicht zwischen den beiden Folien liegt und ein Folienverbund (1) gebildet wird. Der Folienverbund (1) wird anschließend auf einer dritten Rolle (30) aufgerollt.

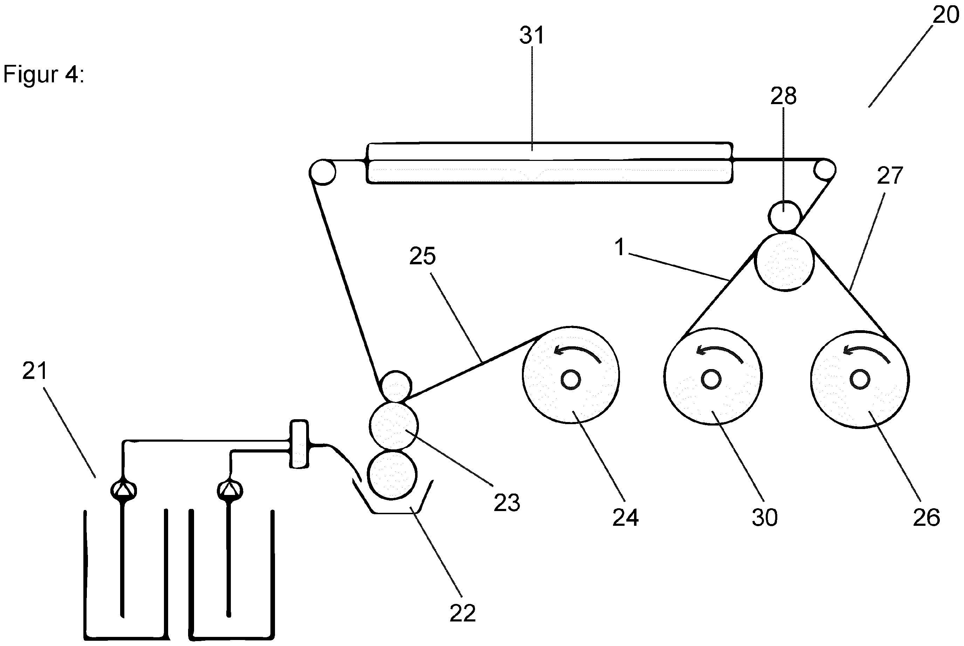

In Figur 4 ist eine Vorrichtung zur Herstellung (20) eines zweilagigen lösemittelhaltigen erfindungsgemäßen Folienverbunds (1) schematisch dargestellt, anhand derer folgend das Verfahren zur Herstellung eines solchen Folienverbunds (1) erläutert wird.

In einer Mischanlage (21) werden die Komponenten Klebstoff und Lösemittel miteinander vermengt und einem Auftragswerk (22) zugeführt. Das Auftragswerk (22) trägt den Klebstoff in Form einer Klebeschicht mithilfe von Übertragungswalzen (23) auf eine von einer ersten Rolle (24) abgerollten ersten Folie (25) auf. Anschließend läuft die erste Folie (25) durch eine Trocknungseinrichtung (31), in der der lösemittelhaltige Klebstoff getrocknet wird. Mithilfe eines Kaschierwerks (28) wird die von einer zweiten Rolle (26) abgerollte zweite Folie (27) so mit der ersten Folie (25) verbunden, dass die Klebeschicht zwischen den beiden Folien liegt und ein Folienverbund (1) gebildet wird. Der Folienverbund (1) wird anschließend auf einer dritten Rolle (30) aufgerollt.

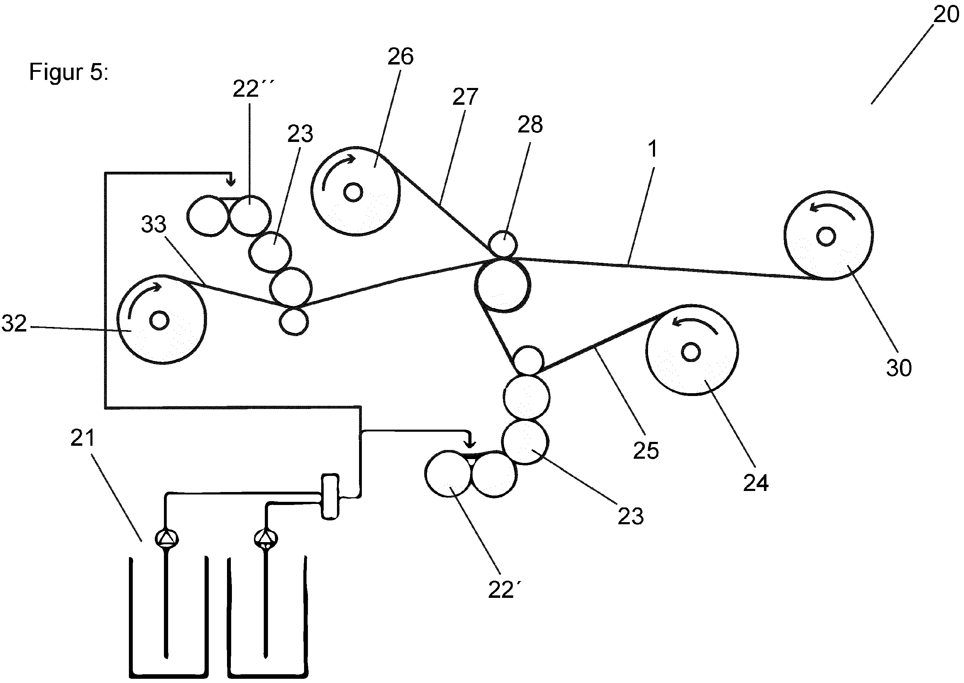

In Figur 5 ist eine Vorrichtung zur Herstellung (20) eines dreilagigen lösemittelfreien erfindungsgemäßen Folienverbunds (1) schematisch dargestellt, anhand derer folgend das Verfahren zur Herstellung eines solchen Folienverbunds (1) erläutert wird.

In einer Mischanlage (21) werden die Komponenten Klebstoff und Härter miteinander vermengt und einem ersten Auftragswerk (22`) und einem zweiten Auftragswerk (22") zugeführt. Das erste Auftragswerk (22`) trägt den Klebstoff in Form einer Klebeschicht mithilfe von Übertragungswalzen (23) auf eine von einer ersten Rolle (24) abgerollten ersten Folie (25) auf. Das zweite Auftragswerk (22") trägt den Klebstoff in Form einer Klebeschicht mithilfe von Übertragungswalzen (23) auf eine von einer vierten Rolle (32) abgerollten dritten Folie (33) auf. Mithilfe eines Kaschierwerks (28) wird die von einer zweiten Rolle (26) abgerollte zweite Folie (27) so mit der ersten Folie (25) und der dritten Folie (33) verbunden, dass die Klebeschichten zwischen der ersten Folie (25) und der dritten Folie (33) und der zweiten Folie (27) und der dritten Folie (33) liegen und ein Folienverbund (1) gebildet wird. Dabei bildet die dritte Folie (33) die mittlere Schicht des Folienverbunds (1). Der Folienverbund (1) wird anschließend auf einer dritten Rolle (30) aufgerollt.

## Patentansprüche

1. Folienverbund (1) zur Verpackung von Produkten, wobei der Folienverbund (1) einen Schichtaufbau aus mindestens zwei Schichten aufweist, **dadurch gekennzeichnet, dass** der Folienverbund (1) übereinander zumindest
- eine erste Schicht einer kompostierbaren thermoplastischen Polyesterfolie in einer Stärke von 10µm bis 70µm und
- mindestens eine zweite Schicht einer kompostierbaren Cellulosefolie in einer Stärke von 19µm bis 45µm aufweist,
wobei die Schichten des Folienverbunds (1) durch einen kompostierbaren Klebstoff miteinander verbunden sind, dass eine Schicht des kompostierbaren Klebstoffs eine Stärke von 1 µm bis 4µm aufweist und dass die thermoplastische Polyesterfolie als eine Stärkeblendfolie ausgebildet ist, die aliphatische und aromatische Polyester (Copolyester) und einen Anteil von 35-55 Mol-% (bezogen auf den Säureanteil) Terephthalsäure aufweist, oder dass die thermoplastische Polyesterfolie als eine PLA-Blend-Folie ausgebildet ist, die Polylactide aus Milchsäuren und Lactiden und einen Anteil von 35-55 Mol-% (bezogen auf den Säureanteil) Terephthalsäure aufweist, wobei die Materialien des Folienverbunds (1) zertifiziert kompostierbar nach EN 13432 und/oder AS 5810 und/oder NF T51-800:2015 sind.

2. Folienverbund (1) nach Anspruch 1, **dadurch gekennzeichnet, dass** das aliphatische/aromatische Copolyester mindestens eine der Komponenten 1,2-Ethandiol, 1,3-Propandiol, 1,4-Butandiol, Adipinsäure, Sebacinsäure und/oder Butadinsäure aufweist.

3. Folienverbund (1) nach einem der vorstehenden Ansprüche, **dadurch gekennzeichnet, dass** die thermoplastische Polyesterfolie und die Cellulosefolie heißsiegelfähig und/oder ultraschallsiegelfähig sind.

4. Folienverbund (1) nach einem der vorstehenden Ansprüche, **dadurch gekennzeichnet, dass** die Cellulosefolie mindestens einer Schicht des Folienverbunds (1) eine einseitige oder beidseitige Barrierebeschichtung (13) aufweist, die eine Migration von Sauerstoff und Wasserdampf hemmt.

5. Folienverbund (1) nach einem der vorstehenden Ansprüche, **dadurch gekennzeichnet, dass** die thermoplastische Polyesterfolie und die Cellulosefolie heimkompostierbar ausgebildet sind.

6. Verpackung, **dadurch gekennzeichnet, dass** diese zumindest teilweise aus einem Folienverbund (1) gemäß einem der Ansprüche 1 bis 5 hergestellt ist.

7. Verpackung nach Anspruch 6, **dadurch gekennzeichnet, dass** die Innenseite durch die thermoplastische Polyesterfolie des Folienverbunds (1) gegeben ist.

8. Verpackung nach einem der Ansprüche 6 oder 7, **dadurch gekennzeichnet, dass** diese als ein Verpackungsbeutel ausgebildet ist, der mindestens eine Siegelnaht aufweist.

9. Verfahren zur Herstellung eines Folienverbunds (1) nach Anspruch 1 aufweisend zumindest die folgenden Verfahrensschritte:
- Mischen von Klebstoffkomponenten in einer Mischanlage zu einem Klebstoff
- Auftragen des Klebstoffs auf die Innenseite einer ersten Folie
- Zusammenfügen der ersten Folie und einer zweiten Folie zu einem Folienverbund (1), wobei die mit Klebstoff bedeckte Innenseite der ersten Folie mithilfe eines Kaschierwerks an der zweiten Folie angedrückt wird
- Aufwickeln des Folienverbunds auf einer Rolle

10. Verfahren zur Herstellung eines Folienverbunds (1) nach Anspruch 9, **dadurch gekennzeichnet**, dieses zur Herstellung eines Folienverbunds (1) aus drei Folienschichten ausgebildet ist, wobei der so hergestellte Folienverbund (1) aus einer inneren Schicht (10), einer mittleren Schicht (11) und einer äußeren Schicht (12) besteht, wobei auf die Innenseite der die äußere Schicht (12) bildenden Folie und auf die zur Verbindung mit der inneren Schicht (10) vorgesehene Seite der die mittlere Schicht (11) bildenden Folie Klebstoff aufgetragen wird, bevor die Folien zu einem Folienverbund (1) verbunden werden.

## Claims

1. Film composite (1) for packaging of products, the film composite (1) having a layer construction of at least two layers, **characterized in that** the film composite (1) has one above another at least
- a first layer of a compostable thermoplastic polyester film in a thickness of 10 µm to 70 µm and
- at least a second layer of a compostable cellulose film in a thickness of 19 µm to 45 µm,
the layers of the film composite (1) being joined to one another by a compostable adhesive, **in that** a layer of the compostable adhesive has a thickness of 1 µm to 4 µm and **in that** the thermoplastic polyester film is configured as a starch blend film which comprises aliphatic and aromatic polyesters (copolyesters) and a fraction of 35-55 mol% (based on the acid fraction) of terephthalic acid, or **in that** the thermoplastic polyester film is configured as a PLA blend film which comprises polylactides of lactic acids and lactides and a fraction of 35-55 mol% (based on the acid fraction) of terephthalic acid, the materials of the film composite (1) having certified compostability according to EN 13432 and/or AS 5810 and/or NF T51-800:2015.

2. Film composite (1) according to Claim 1, **characterized in that** the aliphatic/aromatic copolyester comprises at least one of the components 1,2-ethanediol, 1,3-propanediol, 1,4-butanediol, adipic acid, sebacic acid and/or butanedioic acid.

3. Film composite (1) according to either of the preceding claims, **characterized in that** the thermoplastic polyester film and the cellulose film are heat-sealable and/or ultrasound-sealable.

4. Film composite (1) according to any of the preceding claims, **characterized in that** the cellulose film of at least one layer of the film composite (1) has a barrier coating (13) on one or both sides that inhibits migration of oxygen and water vapour.

5. Film composite (1) according to any of the preceding claims, **characterized in that** the thermoplastic polyester film and the cellulose film are of home-compostable configuration.

6. Packaging, **characterized in that** it is produced at least partly of a film composite (1) according to any of Claims 1 to 5.

7. Packaging according to Claim 6, **characterized in that** the inner side consists of the thermoplastic polyester film of the film composite (1).

8. Packaging according to either of Claims 6 and 7, **characterized in that** it is configured as a packaging pouch which has at least one sealing seam.

9. Method for producing a film composite (1) according to Claim 1, comprising at least the following method steps:
- mixing adhesive components in a mixing unit to give an adhesive
- applying the adhesive to the inner side of a first film
- assembling the first film and a second film to give a film composite (1), the adhesive-covered inner side of the first film being pressed against the second film by means of a laminating mechanism
- winding the film composite into a roll.

10. Method for producing a film composite (1) according to Claim 9, **characterized in that** it is configured for producing a film composite (1) composed of three film layers, the film composite (1) thus produced consisting of an inner layer (10), a middle layer (11) and an outer layer (12), adhesive being applied to the inner side of the film forming the outer layer (12) and to that side of the film forming the middle layer (11) that is intended for joining to the inner layer (10), before the films are joined to give a film composite (1).

## Revendications

1. Feuille composite (1) pour l'emballage de produits, la feuille composite (1) comprenant une structure stratifiée constituée d'au moins deux couches, **caractérisée en ce que** la feuille composite (1) comprend, l'une au-dessus de l'autre,
- une première couche d'une feuille de polyester thermoplastique compostable sur une épaisseur de 10 µm à 70 µm et
- au moins une deuxième couche d'une feuille de cellulose compostable sur une épaisseur de 19 µm à 45 µm,
les couches de la feuille composite (1) étant liées l'une à l'autre par un adhésif compostable ; qu'une couche de l'adhésif compostable présente une épaisseur de 1 µm à 4 µm, et que la feuille de polyester thermoplastique est conçue comme une feuille d'un composite d'amidon, qui comprend des polyesters (copolyesters) aliphatiques et aromatiques et une proportion de 35 à 55 % en moles (par rapport à la partie acide) d'acide téréphtalique ; ou que la feuille de polyester thermoplastique est conçue comme une feuille de composite de PLA, qui comprend des polylactides d'acides lactiques et de lactides et une proportion de 35 à 55 % en moles (par rapport à la partie acide) d'acide téréphtalique, les matériaux de la feuille composite (1) étant certifiés et compostables selon EN 13432 et/ou AS 5810 et/ou NF T51-800:2015.

2. Feuille composite (1) selon la revendication 1, **caractérisée en ce que** le copolyester aliphatique/aromatique comprend au moins l'un des composants 1,2-éthanediol, 1,3-propanediol, 1,4-butanediol, acide adipique, acide sébacique et/ou acide butanedioïque.

3. Feuille composite (1) selon l'une des revendications précédentes, **caractérisée en ce que** la feuille de polyester thermoplastique et la feuille de cellulose peuvent être thermosoudées et/ou soudées aux ultrasons.

4. Feuille composite (1) selon l'une des revendications précédentes, **caractérisée en ce que** la feuille de cellulose d'une couche de la feuille composite (1) présente un revêtement barrière (13) sur une face ou sur deux faces, qui empêche une migration d'oxygène et de vapeur d'eau.

5. Feuille composite (1) selon l'une des revendications précédentes, **caractérisée en ce que** le polyester thermoplastique et la feuille de cellulose sont conçus compostables à la maison.

6. Emballage, **caractérisé en ce qu'**il est au moins partiellement fabriqué à partir d'une feuille composite (1) selon l'une des revendications 1 à 5.

7. Emballage selon la revendication 6, **caractérisé en ce que** la face intérieure est définie par la feuille de polyester thermoplastique de la feuille composite (1).

8. Emballage selon l'une des revendications 6 ou 7, **caractérisé en ce qu'**il est conçu comme un sac d'emballage, qui comprend au moins un joint thermoscellé.

9. Procédé de fabrication d'une feuille composite (1) selon la revendication 1, comprenant au moins les étapes suivantes :
- mélange des composants de l'adhésif dans un équipement mélangeur pour obtenir un adhésif
- application de l'adhésif sur la face intérieure d'une première feuille
- réunion de la première feuille et d'une deuxième feuille pour obtenir une feuille composite (1), la face intérieure de la première feuille, recouverte d'adhésif, étant à l'aide d'un équipement de contrecollage appuyée contre la deuxième feuille
- enroulement de la feuille composite sur un rouleau.

10. Procédé de fabrication d'une feuille composite (1) selon la revendication 9, **caractérisé en ce qu'**il est conçu pour la fabrication d'une feuille composite (1) à partir de trois couches de feuille, la feuille composite (1) ainsi fabriquée étant constituée d'une couche intérieure (10), d'une couche centrale (11) et d'une couche extérieure (12), de l'adhésif étant appliqué sur la face intérieure de la feuille formant la couche extérieure (12) et sur la face, prévue pour assemblage à la couche intérieure (10), de la feuille formant la couche centrale (11), avant assemblage des feuilles pour former une feuille composite (1).
